# EUROPÄISCHE PATENTSCHRIFT

(11) **EP 3 059 116 B1**
(45) Veröffentlichungstag und Bekanntmachung des Hinweises auf die Patenterteilung: **23.10.2019**
(21) Anmeldenummer: 16156702.9
(22) Anmeldetag: 22.02.2016
(51) Int. Cl.: B60N 2/90, B60N 2/75, B60N 2/80, B60N 2/02, B60N 2/06, B60N 2/10, B60N 2/22, B60N 2/66, B60N 2/16, B60N 2/24

(54) **ERGONOMIESITZ**
ERGONOMIC SEAT
SIEGE ERGONOMIQUE

(30) Priorität: 23.02.2015 DE 102015102558
(43) Veröffentlichungstag der Anmeldung: 24.08.2016
(73) Patentinhaber: GRAMMER AG, 92224 Amberg (DE)
(72) Erfinder: Bühlmeyer, Katja, 92281 Königstein (DE); Demleitner, Berthold, 92272 Freudenberg (DE); Delling, Gerhard, 92546 Schmidgaden (DE); Sonnleitner, Tobias, 90489 Nürnberg (DE)
(74) Vertreter: Hannke, Christian

(56) Entgegenhaltungen:
- DE-A1- 19 522 897
- DE-A1-102007 033 306

## Beschreibung

Die Erfindung betrifft einen Fahrzeugsitz mit einem Sitzteil und einer Rückenlehne und mit veränderbaren Sitzkonfigurationspositionen, umfassend eine erste Position einer Schulterstütze, eine zweite Position einer Lendenstütze, eine dritte Sitzhöhenposition, eine vierte Längsposition des Fahrzeugsitzes, eine fünfte Sitzneigungsposition und eine sechste Rückenlehnenneigungsposition, mittels welcher eine erste und eine davon verschiedene zweite Sitzkonfiguration definierbar sind.

Aus dem Stand der Technik sind derartige Fahrzeugsitze bekannt, die es ermöglichen, die Sitzposition eines Fahrzeugführers nach dessen Wünschen bezüglich der Ergonomie und dem Fahrempfinden einzustellen. Die entsprechenden Verstellmöglichkeiten, wie beispielsweise die Neigung der Sitzfläche, die Rückenlehnenneigungsposition oder die Sitzhöhenposition werden dabei vor dem Fahrtbeginn nacheinander eingestellt und während einer Fahrt nicht mehr oder kaum mehr verändert.

Ein Fahrzeugführer, der sich besonders bei langen Fahrten lange in der gleichen Position, nämlich der vor Fahrbeginn eingestellten, befindet, kann hierdurch, etwa durch kurvenreiche Fahrt, Unebenheiten oder auch aufgrund einer fehlerhaften Sitzeinstellung, vor allem durch eine monotone, also einseitige Sitzhaltung, Schmerzen durch Überbelastung der Körperteile, insbesondere der Muskeln, erfahren.

Aus der Druckschrift DE 10 2007 033306 A1 ist ein dynamischen Stabilisationssitz, mittels welchem verschiedene Positionen des Sitzes einstellbar und abrufbar sind. Dabei werden zur Einstellung der Positionen jeweils ein Parameter verstellt beziehungsweise verschiedene Parameter nacheinander verstellt

Aus der Druckschrift DE 195 22 897 A1 ist ein einstellbarer Sitz mit einer Sitzanpassung an die Größe des Fahrers bekannt. Ausgehend von einer Betätigung der Sitzlängsverstellung sind weitere Parameter durch eine Steuereinrichtung nach der Betätigung der Sitzlängsverstellung einstellbar.

Es ist daher die Aufgabe der Erfindung, einen Fahrzeugsitz bereitzustellen, der einen Fahrzeugführer während der Fahrt dazu animiert und motiviert, einen Haltungswechsel durchzuführen, um so insbesondere die Wirbelsäule zu entlasten und Schmerzen durch zu langes und/oder falsches Sitzen vorzubeugen.

Die Aufgabe der Erfindung wird gelöst von einem Fahrzeugsitz mit einem Sitzteil und einer Rückenlehne und mit veränderbaren Sitzkonfigurationspositionen, umfassend eine erste Position einer Schulterstütze, eine zweite Position einer Lendenstütze, eine dritte Sitzhöhenposition, eine vierte Längsposition des Fahrzeugsitzes, eine fünfte Sitzneigungsposition und eine sechste Rückenlehnenneigungsposition, mittels welcher eine erste und eine davon verschiedene zweite Sitzkonfiguration definierbar sind, wobei sich die Sitzkonfigurationen in mindestens zwei verschiedenen Positionen unterscheiden und der Fahrzeugsitz eine Steuereinrichtung aufweist, mittels welcher die erste und die zweite Sitzkonfiguration des Fahrzeugsitzes abwechselnd mittels einer simultanen und voneinander unabhängigen Veränderung von mindestens zwei verschiedenen Positionen einstellbar sind.

Die erste Sitzkonfiguration entspricht dabei vorzugsweise einer aufrechten Haltung des Fahrzeugführers, während die zweite Sitzkonfiguration vorzugsweise eine geneigte Haltung des Fahrzeugführers darstellt. Die aufrechte Haltung entspricht vorteilhafterweise einer Lordose-unterstützenden Sitzkonfiguration, die geneigte Haltung einer Kyphose-unterstützenden Sitzkonfiguration. Der Wechsel zwischen den beiden Sitzkonfigurationen wird nachfolgend auch als "Gesundheitsfunktion" bezeichnet.

Als Lordose wird eine Krümmung der Wirbelsäule nach vorne, also nach ventral, bezeichnet. Natürlicherweise umfasst die Wirbelsäule zwei Lordose-Krümmungen, einmal im Bereich der Lendenwirbelsäule (lumbal) und einmal im Bereich der Halswirbelsäule (cervical).

Als Kyphose wird eine Krümmung der Wirbelsäule nach hinten, also nach dorsal, bezeichnet. Natürlicherweise umfasst die Wirbelsäule zwei Kyphose-Krümmungen, einmal im Brustbereich (Brustkyphose) und einmal am Ende der Wirbelsäule (Sakralkyphose).

Der erfindungsgemäße Fahrzeugsitz ist demnach in verschiedenen, vorzugsweise mindestens sechs voneinander verschiedenen Sitzkonfigurationspositionen, kurz Positionen, einstellbar, wodurch eine optimale Anpassung des Sitzes an die Physis des Fahrzeugführers durchführbar ist, wobei unter einer Sitzneigungsposition die Neigung des Sitzes oder die Neigung der Sitzfläche, auf der der Fahrzeugführer sitzt, zu verstehen ist. Es ist jedoch auch denkbar, weniger als sechs oder mehr als sechs einstellbare Positionen vorzusehen. Beispielsweise ist es denkbar, eine siebte Position einer Kopfstütze zu berücksichtigen. Vorzugsweise ist dabei die Neigung der Kopfstütze, insbesondere in Fahrzeugsitzlängsrichtung nach vorne oder nach hinten, einstellbar. Anstelle der bisher genannten ersten bis sechsten bzw. siebten Position kann auch eine andere Auswahl der Positionen für einen Fahrzeugsitz getroffen werden, es kann also aus der Gesamtheit der bereitgestellten Positionen eine Untergruppe ausgewählt werden. Erfindungsgemäß sollen aber die Positionen weiterhin simultan und unabhängig voneinander einstellbar sein.

Erfindungsgemäß findet abwechselnd eine Einstellung der ersten und der zweiten Sitzkonfiguration durch eine Veränderung von zumindest zwei verschiedenen Positionen statt. Diese Positionen werden simultan verändert bzw. eingestellt, jedoch aber unabhängig voneinander, das heißt, eine Veränderung einer Position bedingt nicht die Veränderung einer anderen Position in einer bestimmten Weise. Durch diese simultane, jedoch unabhängige Verstellung der Positionen kann sich die Haltung des Köpers entsprechend der Änderung des Fahrzeugsitzes, insbesondere den Änderungen der Positionen, besonders gut ändern, da die Körperhaltung der Änderung des Fahrzeugsitzes folgt.

Besonders vorteilhaft kann die Körperstruktur eines Fahrzeugführers entlastet werden, wenn sich die Sitzkonfigurationen in mehr als zwei, mehr als drei, mehr als vier, mehr als fünf oder sechs oder mehr als sechs Sitzkonfigurationspositionen unterscheiden. Es kann auch denkbar sein, mehr als die sechs genannten, beispielsweise sieben Sitzkonfigurationspositionen simultan und unabhängig voneinander einzustellen.

Durch die simultane Änderung von mindestens zwei der genannten Sitzkonfigurationspositionen wird eine besonders gute Entlastung der Körperstrukturen herbeigeführt. Es ist bekannt, dass durch Verstellen einer solchen Position bereits die Haltung des Fahrers insgesamt, also auch andere Positionen, beeinflusst werden. Als Beispiel sei hier die Neigung der Sitzfläche aufgeführt. Wird die Neigung der Sitzfläche verringert, also etwa der vordere Bereich der Sitzfläche nach unten bewegt während der hintere Bereich der Sitzfläche sich in seiner Position nicht ändert, so ändert, insbesondere vergrößert sich der Winkel zwischen der Sitzfläche und der Rückenlehne. Dementsprechend ändert sich ebenso der Winkel zwischen den Beinen, insbesondere den Oberschenkeln, und dem Torso des Fahrzeugführers. Dadurch bewegt sich das Becken des Fahrzeugführers, wodurch die Lordose der Lende, also die Krümmung der Lendenwirbelsäule, beeinflusst wird. Durch die Änderung der Lordose der Lende wird die Krümmung der Brustkyphose verändert.

Zwar hängen die Sitzkonfigurationspositionen zur bestmöglichen Einstellung und Unterstützung für den Fahrzeugführer voneinander ab, sie können und werden dennoch gemäß der vorliegenden Erfindung vorzugsweise mittels der Steuereinrichtung unabhängig voneinander eingestellt und angesteuert werden.

Es ist daher besonders vorteilhaft, die Sitzkonfigurationspositionen simultan zu verändern, um eine Änderung der Sitzposition im Einklang mit der Änderung der Physis des Fahrzeugführers, insbesondere seiner Wirbelsäule, zu gewährleisten. Die Konturveränderung des Fahrzeugsitzes bewirkt eine Kontur- und Haltungsänderung des Körpers des Fahrzeugführers. Somit kann eine bestmögliche Abstützung des Fahrzeugführers durch den Fahrzeugsitz während der Fahrt und insbesondere während der Haltungsänderung gewährleistet werden.

Alternativ zur Veränderung aller Sitzkonfigurationspositionen gleichzeitig kann in mindestens zwei aufeinanderfolgenden Einstellschritten jeweils zumindest zwei der Sitzkonfigurationspositionen simultan und unabhängig voneinander eingestellt werden, wobei auf eine sinnvolle Reihenfolge und Aufteilung der Einstellschritte zu achten ist.

Beispielsweise könnte dabei zuerst die Rückenlehnenneigungsposition und die Schulterstützenposition simultan und unabhängig voneinander eingestellt werden, im Anschluss simultan und unabhängig voneinander die Lendenstützenposition und die Längsposition des Sitzes, und schließlich simultan und unabhängig voneinander die Sitzneigungsposition und die Sitzhöhenposition.

Es kann natürlich auch eine andere Einteilung der Positionen denkbar sein. Es sind aber vorteilhaft mindestens zwei Schritte vorgesehen, wobei in jedem Schritt mindestens zwei der Positionen unabhängig voneinander und simultan einstellbar sind.

Gemäß einer bevorzugten Ausführungsform umfasst die Steuereinrichtung eine Speichereinrichtung, in welcher die erste und die zweite Sitzkonfiguration abspeicherbar sind. Somit kann jederzeit auf die in der Speichereinrichtung gespeicherten Sitzkonfigurationen mittels der Steuereinrichtung zurückgegriffen werden, wodurch eine Einstellung der Sitzkonfigurationen vor Fahrbeginn unnötig ist, wobei die Steuereinrichtung die erhaltenen Daten weiterverarbeiten kann.

Zur Veränderung von Positionen ist eben die Steuereinrichtung vorgesehen, wobei es sich bei dieser Steuereinrichtung vorzugsweise um eine elektrisch und/oder elektronisch ansteuerbare Steuereinrichtung handelt. Die Steuereinrichtung ist derart ausgebildet, dass sie simultan, also zeitgleich, die verschiedenen Positionen einstellen kann.

Es ist dabei denkbar, dass ein Fahrzeugführer eine Sitzkonfiguration einstellt und vorzugsweise die Steuereinrichtung erkennt, um welche Sitzkonfiguration es sich hierbei handelt, insbesondere wird erkannt, ob eine Lordose-unterstützende oder eine Kyphose-unterstützende Position vorliegt. Besonders vorteilhaft schlägt die Steuereinrichtung dann dem Fahrzeugführer die andere Sitzkonfiguration vor, speichert diese nach Freigabe oder Veränderung und Freigabe ab und startet dann die Gesundheitsfunktion. Alternativ oder kumulativ ist es denkbar, dass die Steuerungseinrichtung abhängig von der ersten Sitzkonfiguration und dem Erkennen der ersten Sitzkonfiguration eine zweite Sitzkonfiguration berechnet und dem Fahrer vorschlägt und/oder einstellt.

Erfindungsgemäß sind mittels der Steuereinrichtung die erste und die zweite Sitzkonfiguration abwechselnd automatisch einstellbar, wodurch ein Fahrzeugführer nicht mehr manuell die Positionen einstellen muss, sondern dies automatisch von der Steuereinrichtung durchgeführt wird.

Der Fahrzeugsitz wechselt also während einer Fahrt automatisch zwischen der ersten und der zweiten Sitzkonfiguration automatisch hin- und her. Demnach ist ein Wechsel von der ersten zur zweiten Sitzkonfiguration und/oder von der zweiten zur ersten Sitzkonfiguration nach einem vorbestimmbaren und veränderbaren Zeitintervall durchführbar. Vorteilhaft beträgt das Zeitintervall zwischen 1 und 30 Minuten, vorteilhafter zwischen 5 und 15 Minuten. Als besonders vorteilhaft hat sich hierbei ein Zeitintervall von 10 Minuten herausgestellt. Ist beispielsweise die erste Sitzkonfiguration eingestellt, so werden nach dem Zeitintervall von 10 Minuten die entsprechenden Positionen verändert, so dass die zweite Sitzkonfiguration eingestellt ist. Selbstverständlich sind auch andere Zeitintervalle denkbar, wobei sich zur bestmöglichen Entlastung des Fahrzeugführers sich der Wert des Zeitintervalls innerhalb der oben genannten Zeitintervalle befinden sollte.

Vorteilhafterweise kann der Fahrzeugführer auf einen Haltungswechsel und/oder auf die Pausenzeit, die zwischen dem Wechsel der einen Konfiguration in die andere Konfiguration liegt, aufmerksam gemacht werden. Natürlich sind auch andere Zeitintervalle denkbar. Da jedoch besonders bei längeren Fahrten falsche und monotone Haltungen des Fahrzeugführers zu Schmerzen führen, ist es vorteilhaft, längere Zeitintervalle einzustellen, um den Fahrzeugführer nicht schon bei kürzeren Fahrstrecken mit Haltungswechseln zu konfrontieren.

Gemäß einer bevorzugten Ausführungsform ist es vorgesehen, dass ein auf dem Fahrzeugsitz sitzender Fahrzeugführer mittels eines akustischen und/oder optischen Signals aufforderbar ist, einen Wechsel der Sitzkonfigurationen durchzuführen.

Es ist daher denkbar, dass nach einer gewissen Fahrzeit der Fahrzeugführer aufgefordert, den vorzugsweise automatischen Haltungswechsel des Fahrzeugsitzes einzuschalten und zu verwenden. Hierbei kann ein Animationssignal in Form einer Einblendung auf dem Touch-Pad oder dergleichen und/oder ein akustisches Signal angedacht sein. Um den Fahrzeugführer tatsächlich zur Verwendung der Gesundheitsfunktion zu bewegen, kann das Animationssignal vorzugsweise so lange andauern, bis der Fahrzeugführer die Gesundheitsfunktion aktiviert. Vorzugsweise kann das Animationssignal stärker werden, je länger der Fahrzeugführer die Gesundheitsfunktion nicht aktiviert.

Durch den stetigen, nach bestimmten Zeitintervallen vollzogene Wechsel der Sitzkonfigurationen und einhergehend der Haltung des Fahrzeugführers während einer Fahrt fungiert der Sitz als eine Art "personal trainer", da der Sitz den Fahrer dazu bringt und veranlasst, einen Haltungswechsel analog zur Veränderung des Fahrzeugsitzes zu vollziehen. Durch diese, vorzugsweise in regelmäßigen Abständen, vollzogene Haltungswechsel wird vor allem bei längeren Fahrten, Fahrten entlang Steigungen oder dergleichen, der Fahrzeugführer angeregt, seine Haltung zu ändern, was dazu führt, dass seine Körperstrukturen, insbesondere seine Muskeln und seine Wirbelsäule, entlastet werden.

Besonders vorteilhaft ist die erste bzw. die zweite Sitzkonfiguration nach einem Einsatzgebiet des Fahrzeugs, das vom Fahrzeugführer angegeben werden kann, einstellbar bzw. aktivierbar. Denkbare Einsatzgebiete sind beispielsweise längere Autobahnfahrten, Geländefahrten oder Stadtfahrten. Es ist dabei denkbar, dass die Gesundheitsfunktion bei Stau oder bei gemäßigten Geschwindigkeiten aktiv ist und bei hohen Geschwindigkeiten, also beispielsweise bei 180 km/h oder mehr, automatisch deaktiviert wird, da der Fahrzeugführer bei derartigen Geschwindigkeiten konzentriert und ruhig sitzen sollte, um die Sicherheit nicht zu gefährden. Vorteilhaft kann die Geschwindigkeit, bei der die Gesundheitsfunktion deaktiviert werden soll, nach den Bedürfnissen des Fahrzeugführers eingestellt werden.

Gemäß einer bevorzugten Ausführungsform ist jede der Sitzkonfigurationspositionen durch mindestens einen Aktuator, der mit einem zu der jeweiligen Sitzkonfigurationsposition gehörenden Bauteil wirkverbunden ist, veränderbar ist. Der Aktuator ist beispielsweise ein Elektromotor, der durch die Steuereinrichtung ansteuerbar ist und zugleich mit dem zur Sitzkonfigurationsposition gehörenden Bauteil wirkverbunden ist. Weiter ist es denkbar, dass der Aktuator als eine Fluidpumpe ausgestaltet ist, welche mit einer Luftkammer fluidisch verbunden ist, wobei mittels der Luftkammer die Sitzkonfigurationsposition veränderbar ist.

Dabei wird jedes dieser Bauteile vorteilhaft durch den Aktuator verstellt, der von der Steuereinrichtung angetrieben wird. So ist beispielsweise zur Verstellung der Rückenlehnenneigung bzw. der Sitzneigung ein Motor vorstellbar, der die jeweilige Schwenkachse antreibt und so die Neigung einstellbar ist.

Mittels der Aktuatoren, die vorzugsweise von der Steuereinrichtung elektronisch und/oder elektrisch angesteuert und angetrieben werden, ist es vorstellbar, eine Geschwindigkeit des Wechsels von der aufrechten zur geneigten Haltung oder umgekehrt einzustellen. So ist es besonders vorteilhaft, die Haltungsänderung nicht zu abrupt herbeizuführen, da dies dem Fahrzeugführer Unbehagen bereiten kann, da an den entsprechenden Körperstellen zu viel Druck einwirken kann. Es ist daher vorteilhaft, eine langsamere Verstellung der Positionen und demzufolge der Haltung herbeizuführen, was für den Fahrzeugführer komfortabler ist und angenehmer aufgefasst wird. Insgesamt ist die Intensität des Änderns der Positionen und die Verstellgeschwindigkeit der Positionen so zu wählen, dass es für den Fahrzeugführer angenehm ist. Kritische, in diesem Fall unangenehm empfundene Druckempfindungen bei Verstellen der Positionen werden hierbei also verringert.

Besonders vorteilhaft ist die Intensität durch den Fahrzeugführer mittels der Steuereinrichtung vorgebbar und auch vorteilhaft während des Fahrbetriebs veränderbar. Somit kann der Fahrer die Intensität nach seinen Bedürfnissen einstellen und kontrollieren.

Weiter ist es vorteilhaft, die Verstellgeschwindigkeit abhängig vom der Geschwindigkeit des Fahrzeugs und/oder dem Zustand des Fahrers automatisch mittels der Steuereinrichtung anzupassen. Alternativ kann natürlich eine manuelle Einstellung der Verstellgeschwindigkeit durch den Fahrzeugführer vorgenommen werden. Insbesondere kann auch die Auslösung der Gesundheitsfunktion von der Geschwindigkeit und/oder dem Zustand des Fahrzeugführers abhängen.

Vorzugsweise ist es dabei sinnvoll, die Gesundheitsfunktion mit Sensoren, die die Körpermaße und/oder den Zustand des Fahrzeugführers erkennen und aufnehmen, und /oder mit einem Fahrerüberwachungssystem zu koppeln. Sollte durch das Fahrerüberwachungssystem beispielsweise erkannt werden, dass der Fahrer eingeschlafen ist und nicht aktiv ist, kann ein abrupter Haltungswechsel durchgeführt werden, um den Fahrer wieder aufzuwecken.

Weiter ist es vorteilhaft, die Verstellgeschwindigkeiten und/oder Verstellamplituden mit dem Fahrerüberwachungssystem und/oder Fahrassistenzsystemen mittels der Steuereinrichtung zu koppeln. So kann abhängig von Fahrsituationen, beispielsweise rückwärts einparken, die für die entsprechende Fahrsituation die bessere Konfiguration und/oder die Grundeinstellung mittels der Steuereinrichtung ausgewählt werden. Besonders vorteilhaft ist eine derartige Kopplung für ein Fahrassistenzsystem zum autonomen Fahren.

Allgemein ist zu beachten, dass bei einem autonomen Fahren größere Amplituden, das heißt Verstellwege, zurückgelegt werden können als in einem aktiven Fahrbetrieb, da größere Amplituden den aktiven Fahrbetrieb erheblich stören und beeinflussen könnten. Beispielsweise zur Einstellung der Lordoseunterstützung ist es dabei denkbar, dass im Bereich der Lordose, beispielsweise der Lende, der Bereich mittels einer konturverändernden Einrichtung einstellbar ist. Es kann sich um jegliche elektromechanische oder pneumatische Einrichtung handeln. Beispielsweise könnte der Bereich der Lende mittels verschiedener Blechstreifen unterstützt werden, wobei die Blechstreifen miteinander derart verbunden sind, dass durch eine Bewegung eines Blechstreifens auch die umliegenden Blechstreifen beeinflusst werden. Es ist vorstellbar, dass ein Motor mit einem Exzenterelement hinter einem solchen Blechstreifen angeordnet ist und je nach Stellung des Exzenterelements der vorliegende Blechstreifen bewegt wird.

Anstelle des Exzenters ist es auch vorstellbar, ein anderes Verformungselement, wie etwa eine Stange oder dergleichen, angetrieben von einem Motor, gegen einen Blechstreifen zu bewegen. Vorzugsweise ist das Verformungselement mit einem Blechstreifen verbunden und wird durch den Motor nach vorne bzw. nach hinten bewegt. Hierdurch kann sowohl eine Lordosenstellung als auch eine Kyphosenstellung eingestellt werden.

Natürlich sind auch noch andere Ausgestaltungen denkbar, wie beispielsweise eine Einstellung der Lordose bzw. der Kyphose durch Luftkissen oder andere pneumatische Verstellelemente oder durch elektromechanische Verstellelemente.

Ähnliche Verstellungen sind auch für die Schulterstütze denkbar. Darüber hinaus ist es ebenfalls sinnvoll, auch im Hals- und Kopfbereich eine Einstellung der entsprechenden Lordose bzw. Kyphose vornehmen zu können. Dabei kann die Neigung einer Kopfstütze bzw. die Form der Kopfstütze entsprechend geändert werden.

Es ist daher insbesondere vorteilhaft, wenn das Rückenlehnenpolster und das Sitzteilpolster dehnbar und verformbar ausgebildet sind. Vorzugsweise sind Stoffe angedacht, die nach einer Dehnung wieder in ihre ursprüngliche Form zurückkehren, also nicht ausleiern. Derartige Stoffe sind beispielsweise Gewebestoffe mit Elastan oder vergleichbaren Grundstoffen.

Ein solcher Fahrzeugsitz für einen Fahrzeugführer kann dabei natürlich ebenso für einen Beifahrer vorgesehen sein und verwendet werden.

Zur Einstellung der jeweiligen Sitzkonfiguration kann der Fahrzeugführer wie folgend vorgehen. Zuerst stellt er die erste Sitzkonfiguration, also eine aufrechte Haltung für den Fahrzeugführer und vorzugsweise eine Lordose-unterstützende Konfiguration des Fahrzeugsitzes durch Veränderung der verschiedenen Sitzkonfigurationspositionen ein. Diese erste Sitzkonfiguration kann dann nach deren Einstellung vorzugsweise in der Speichervorrichtung der Steuereinrichtung abgespeichert werden. Nach Abspeichern der ersten Sitzkonfiguration kann der Fahrzeugführer nun eine sich von der ersten Sitzkonfiguration unterscheidende zweite Sitzkonfiguration, also eine geneigte Haltung des Fahrzeugführers und vorzugsweise eine Kyphose-unterstützende Konfiguration des Fahrzeugsitzes analog zur ersten Sitzkonfiguration einstellen und diese ebenfalls vorzugsweise in der Speichervorrichtung abspeichern. Vorzugsweise kann eine solche Voreinstellung des Sitzes bildschirmgeführt ausgeführt werden, um dem Fahrzeugführer anzuzeigen, wie er eine erste bzw. zweite Sitzkonfiguration einstellen soll und kann.

Eine Speicherung der jeweiligen Sitzkonfiguration kann vorteilhaft mittels eines Betätigungselements, wie einem Taster, ausgebildet sein, dessen Betätigung eine Speicherung der aktuellen Sitzkonfiguration des Fahrzeugsitzes auslöst. Besonders vorteilhaft können zwei verschiedene Betätigungselemente am Sitz vorhanden sein, wobei das erste Betätigungselement für die Speicherung der ersten Sitzkonfiguration und das zweite Betätigungselement für die Speicherung der zweiten Sitzkonfiguration vorgesehen sind. Die Betätigungselemente erfüllen also eine Memoryfunktion. Diese Betätigungselemente können beispielsweise in eine Armlehne integriert werden oder auch auf einem Touch-Pad oder dergleichen ausgebildet sein. Selbstverständlich sind auch noch andere Ausgestaltungen und Unterbringungen für die Betätigungselemente möglich, die hier nicht weiter ausgeführt werden. Die Betätigungselemente sind hierbei mit der Steuereinrichtung, insbesondere auch mit der Speichereinrichtung der Steuereinrichtung verbunden.

Weiter ist es vorteilhaft, wenn ein drittes Betätigungselement vorgesehen ist, mittels welchen eine Gesundheitsfunktion, also der Wechsel zwischen der aufrechten, vorzugsweise Lordose-unterstützenden und der geneigten, vorzugsweise Kyphose-unterstützenden Sitzposition, aktiviert wird. Durch erneutes Betätigen des dritten Betätigungselements kann vorteilhaft die Gesundheitsfunktion wieder deaktiviert werden.

Alternativ oder kumulativ ist es vorstellbar, dass während eine der Sitzkonfigurationen, also beispielsweise die erste Sitzkonfiguration, eingestellt ist, eine oszillierende Verstellung der Positionen um diese Sitzkonfiguration durchgeführt wird. Unter einer oszillierenden Verstellung der Positionen ist hierbei zu verstehen, dass die Positionen um einen Wert, der vorbestimmt werden kann, gegenüber dem festen Wert der jeweiligen Sitzkonfiguration ebenfalls simultan veränderbar sind. Diese oszillierende Verstellung ist vorteilhaft auch möglich, wenn kein Wechsel zwischen der ersten und zweiten Sitzkonfiguration vorgesehen ist.

Eine solche Funktion ist vorteilhaft, wenn der Fahrzeugführer aufgrund der Verkehrssituation nicht durch große Haltungswechsel abgelenkt werden möchte, aber dennoch kleine Bewegungen durchführen möchte, etwa um wach zu bleiben oder den Körper, wenn auch geringer, zu be- und entlasten.

Diese oszillierende Verstellung wird vorteilhaft mittels eines weiteren Betätigungselements aktiviert. Für die Sitzneigungsposition und die Rückenlehnenneigungsposition werden die Werte in Grad angegeben, für die Sitzhöhenposition und die Längsposition des Sitzes werden die Werte als eine Länge angegeben. Für die Lendenstützenposition und die Schulterstützenposition können beide Wertangaben verwendet werden, vorteilhaft werden diese jedoch auch als Länge angegeben.

Die Verstellwerte liegen dabei vorteilhaft in einem Bereich zwischen -5° bis +5° bzw. -5 mm bis 5 mm, vorteilhafter -3° bis 3° bzw. -3 mm bis 3 mm, und besonders vorteilhaft -2° bis 2° bzw. -2 mm bis 2 mm. Das Vorzeichen gibt dabei an, in welche Richtung das jeweilige Bauteil bewegt wird, also nach hinten bzw. vorne, nach oben bzw. nach unten oder dergleichen.

Vorzugsweise wird die Gesundheitsfunktion nach Einschalten der Zündung automatisch mittels der Steuereinrichtung aktiviert. Die Gesundheitsfunktion muss demnach aktiv vom Fahrzeugführer deaktiviert werden, wenn dieser die Gesundheitsfunktion nicht mehr nutzen möchte.

Vorzugsweise bleiben die erste und die zweite Konfiguration, also die aufrechte und die geneigte Sitzkonfiguration auch nach Beendigung der Fahrt, also nach Verlassen und Abstellen des Fahrzeugs, in der Speichereinrichtung der Steuereinrichtung gespeichert, um so ein erneutes Einstellen der Positionen beim nächsten Fahrtantritt zu vermeiden.

Es ist auch denkbar, bei erneutem Betätigen des ersten bzw. des zweiten Betätigungselements die jeweilige eingespeicherte Sitzkonfiguration zu löschen und zu überschreiben.

Es sei hierbei angemerkt, dass die tatsächliche Sitzposition während einer Fahrt sowohl zu der ersten als auch der zweiten Konfiguration verschieden sein kann.

Es ist darüber hinaus denkbar, dass durch den Fahrzeugsitz die Körpermaße des Fahrzeugführers erfasst werden, beispielsweise über Drucksensoren oder anderen geeigneten Sensoren, die im Fahrzeugsitz, vorzugsweise in der Polsterung des Fahrzeugsitzes, integriert sind und der allgemeine körperliche Zustand des Fahrzeugführers, insbesondere Informationen über die Wirbelsäule, ermittelt werden. Möglich ist auch, dass der Fahrzeugführer in einem Touch-Pad oder dergleichen seine Körpermaße eingibt und die Steuereinrichtung bereits eine Grundeinstellung des Fahrzeugsitzes vornimmt und mittels einer Berechnungseinheit errechnet, wie die erste und zweite Sitzkonfiguration einzustellen sind bzw. eingestellt werden sollten und diese dann dem Fahrzeugführer vorschlägt. Die Grundeinstellung entspricht dabei vorzugsweise der Stellung des Fahrzeugsitzes, die dem grundlegenden Sitztyp des Fahrzeugführers entspricht.

Es ist auch denkbar, mittels einer App für ein mobiles Gerät verschiedene Funktionen zu steuern. Es ist hierbei denkbar, verschiedene Werte eines Fahrzeugführers einzugeben und so die Gesundheitsfunktion zu personalisieren, beispielsweise durch Eingabe von Vorname, Name, Geburtsdatum, Körpergröße und Gewicht.

Die bereitgestellte App kann dabei verschiedene Funktionen umfassen, beispielsweise eine Start-Stopp-Funktion, Auswertung von Sitzhaltungen und Fahrsituationen sowie eine Weckfunktion. Aus einer Auswertung von Sitzhaltungen und Fahrsituationen können daraus abgeleitete Handlungsempfehlungen bereitgestellt werden.

Vorteilhaft sollte während der Fahrt darauf geachtet werden, dass die Verteilung von Kyphose zu Lordose im Wesentlichen gleich ist. Durch Auswertung der Sitzhaltung und der Fahrsituation kann beim nächsten Fahrtbeginn die Verteilung entsprechend angepasst werden. Insbesondere können bestimmte Fahrstrecken, die oft befahren werden, beispielsweise der Weg zur Arbeitsstelle, mit in die Auswertung einbezogen werden und für diese Fahrstrecken ein entsprechendes Programm abgerufen und verwendet werden.

Vorteilhafterweise ist es möglich, dass über die App dem Fahrzeugführer eine entsprechende Handlungsempfehlung übermittelt wird und vom Fahrzeugführer angenommen oder abgelehnt werden kann.

Unter einer Weckfunktion kann beispielsweise verstanden werden, dass der Fahrzeugsitz langsam nach einer bestimmten Zeitspanne aus der Ruhehaltung bzw. eingestellten Sitzkonfiguration in eine aufrechte Haltung verstellt wird und der Fahrzeugführer so sanft geweckt werden kann.

Vorteilhaft kann mittels der Sensoren eine Erhöhung der Bewegung eines Fahrzeugführers erkannt werden, da beispielsweise der Fahrzeugführer mehr auf dem Fahrzeugsitz hin- und her rutscht. Alternativ oder kumulativ kann durch die Sensoren erkannt werden, dass der Fahrzeugführer eine asymmetrische, also gekrümmte Haltung einnimmt. Durch die von den Sensoren aufgenommenen Daten erkennt die Steuereinrichtung, dass der Fahrzeugführer einen anderen bzw. höheren Sitzkomfort wünscht und veranlasst vorteilhaft die Aktivierung der Gesundheitsfunktion.

Besonders vorteilhaft ist es hierbei, dass der Fahrzeugsitz immer so eingestellt wird, also sei es in der Grundeinstellung, der ersten oder zweiten Sitzkonfiguration und besonders vorteilhaft muss gewährleistet sein, dass bei einem Wechsel von einer Sitzkonfiguration zu der anderen der Fahrzeugführer niemals den Kontakt zwischen seinen Füßen und den Pedalen verliert, um die Sicherheit in allen Fahrsituationen gewährleisten zu können. Dies erhöht besonders im Fahrbetrieb die Betriebssicherheit und verringert so das Risiko eines ungewollten Unfalls oder dergleichen, da beispielsweise in einer kritischen Situation die Pedale nicht oder nicht richtig betätigt werden können. Nach Deaktivierung der Gesundheitsfunktion ist es also vorstellbar, dass der Sitz wieder auf die ursprüngliche Sitzkonfiguration eingestellt wird.

Die Aufgabe der Erfindung wird auch gelöst von einem Verfahren zur Einstellung von Sitzkonfigurationen eines Fahrzeugsitzes umfassend ein Sitzteil und eine Rückenlehne und mit veränderbaren Sitzkonfigurationspositionen, umfassend eine erste Position einer Schulterstütze, eine zweite Position einer Lendenstütze, eine dritte Sitzhöhenposition, eine vierte Längsposition des Fahrzeugsitzes, eine fünfte Sitzneigungsposition und eine sechste Rückenlehnenneigungsposition, mittels welcher eine erste und eine davon verschiedene zweite Sitzkonfiguration definiert werden, wobei sich die Sitzkonfigurationen in mindestens zwei verschiedenen Positionen unterscheiden und der Fahrzeugsitz eine Steuereinrichtung aufweist, mittels welcher die erste und die zweite Sitzkonfiguration des Fahrzeugsitzes abwechselnd mittels einer simultanen und unabhängigen Veränderung der mindestens zwei verschiedenen Positionen eingestellt werden.

Erfindungsgemäß bedeutet dies, dass, wenn beispielhaft die erste Sitzkonfiguration eingestellt wird, der Fahrzeugsitz in dieser ersten Sitzkonfiguration verbleibt und nach einem bestimmten Zeitintervall, das vorgegeben und verändert werden kann, die Steuereinrichtung die Sitzkonfigurationspositionen neu einstellt und den Fahrzeugsitz so in die zweite Sitzkonfiguration verstellt.

Vorzugsweise wird ein Wechsel von einer Sitzkonfiguration in die andere Sitzkonfiguration automatisch ausgeführt. Durch einen automatischen Wechsel wird sichergestellt, dass der Fahrer seine Haltung ohne weiteres Zutun seinerseits ändert. Darüber hinaus kann sich der Fahrzeugführer weiterhin auf den Straßenverkehr konzentrieren und wird nicht durch Betätigung von Betätigungselementen oder dergleichen abgelenkt. Darüber hinaus wird sichergestellt, dass der Fahrer nicht die Betätigung der Gesundheitsfunktion, also des Wechsel von einer Sitzkonfiguration zu der anderen Sitzkonfiguration, vergisst.

In einer vorteilhaften Ausführungsform beträgt das Zeitintervall zwischen 1 und 30 Minuten, vorteilhafter zwischen 5 und 15 Minuten und besonders vorteilhaft 10 Minuten. Alternativ oder kumulierend kann das Zeitintervall gestaffelt werden. So ist es beispielsweise denkbar, dass die Steuereinrichtung das Zeitintervall bei Aktivierung der Gesundheitsfunktion auf einen hohen Wert, beispielsweise 30 Minuten setzt, und nach jedem Durchlauf, also einem Wechsel von einer Sitzkonfiguration zu der anderen und wieder zu der vorherigen, das Zeitintervall mittels der Steuereinrichtung verkleinert wird, bis es auf einen gewissen Wert, wie etwa 10 Minuten abgesunken ist. Denkbar sind hierbei 5 Minuten-Schritte, wobei auch andere Schrittwerte vorstellbar sind.

Darüber hinaus ist es denkbar, dass bei Fahrbeginn, also beispielsweise mit Starten des Motors oder Einschalten der Zündung, die Gesundheitsfunktion automatisch aktiviert wird. Es ist dabei natürlich Voraussetzung, dass eine erste und eine zweite Sitzkonfiguration abgespeichert sind und abgerufen werden können. Sollte dies jedoch nicht der Fall sein, wird dem Fahrer signalisiert, die entsprechenden Sitzkonfigurationen einzustellen und abzuspeichern. Es ist auch denkbar, dass nach abspeichern der Sitzkonfigurationen die Gesundheitsfunktion automatisch aktiviert wird oder der Fahrzeugführer mittels eines oder mehrerer Animationssignale aufgefordert wird, die Gesundheitsfunktion zu aktivieren.

Alternativ dazu ist es vorstellbar, dass nach Fahrbeginn ein Countdown zu laufen beginnt. Wenn dieser eingestellte Countdown abgelaufen ist, wird die Gesundheitsfunktion automatisch aktiviert oder der Fahrer mittels eines oder mehrerer Animationssignale dazu aufgefordert, die Gesundheitsfunktion zu aktivieren.

Ein Animationssignal kann dabei ein visuelles und/oder ein akustisches Signal darstellen. Ein visuelles Signal kann beispielsweise über das Touch-Pad oder eine vergleichbare Anzeigevorrichtung angezeigt werden.

Es wird dabei angestrebt, dass der Fahrzeugführer die Gesundheitsfunktion aktiviert und dadurch verwendet. Möchte der Fahrzeugführer die Gesundheitsfunktion nicht mehr nutzen, so muss er diese dann aktiv deaktivieren.
Die grundsätzlichen Verfahrensschritte sind demnach wie folgt. Zunächst stellt der Fahrzeugführer, vorzugsweise bereits vor dem Fahrtbeginn, nacheinander die erste Sitzkonfiguration und dann die zweite Sitzkonfiguration des Fahrzeugsitzes ein und speichert jeweils nach Einstellung der jeweiligen Sitzkonfiguration diese vorzugsweise in der Speichervorrichtung ab. Ein Einstellen der Sitzkonfigurationen wird mittels der Steuereinrichtung vorgenommen, wobei jede der Sitzkonfigurationspositionen einzeln und unabhängig von anderen Parametern eingestellt wird.

Nach dem Einstellen und Abspeichern der beiden Sitzkonfigurationen wird die Gesundheitsfunktion, also der Wechsel zwischen der ersten und der zweiten Sitzkonfiguration entweder automatisch oder manuell aktiviert.

Nach Aktivierung der Gesundheitsfunktion wird vorzugsweise nach einer vorbestimmten Zeit der Fahrzeugsitz in die erste Sitzkonfiguration gebracht. Danach beginnt ein Countdown zu laufen und wenn dieser Countdown abgelaufen ist, werden mittels der Steuereinrichtung zusammen mit der in der Speichervorrichtung gespeicherten Informationen, die von der Steuereinrichtung abgerufen werden, die Aktuatoren dementsprechend angesteuert, wodurch die jeweiligen Positionen simultan derart verändert werden, so dass der Fahrzeugsitz sich nun in der zweiten Sitzkonfiguration befindet.

Nach Einstellung der zweiten Sitzkonfiguration beginnt erneut ein Countdown zu laufen und, wenn dieser abgelaufen ist, wird der Fahrzeugsitz wieder in die erste Sitzkonfiguration gebracht.

Die jeweiligen Sitzkonfigurationspositionen werden hierbei immer simultan und unabhängig voneinander verändert. Ein Wechsel zwischen den beiden Sitzkonfiguration wird solange durchgeführt, bis der Fahrer die Gesundheitsfunktion deaktiviert oder die Fahrt beendet wird, also das Fahrzeug abgestellt wird.

Der Wechsel zwischen der ersten und der zweiten Sitzkonfiguration oder umgekehrt verläuft derart, dass der Fahrzeugführer weiterhin mit der Pedalerie sowie dem Lenkrad in Kontakt steht.

Denkbar ist es auch, dass Daten über die Nutzungshäufigkeit der Gesundheitsfunktion protokolliert werden und in der Speichereinrichtung abspeicherbar sind. Die Daten können beispielsweise durch eine App, beispielsweise die App "Drive FIT", ausgelesen werden und ausgewertet werden. Diese Daten können auch an entsprechende Stellen, wie etwa Krankenkassen, weitergeleitet werden, so dass dies möglicherweise zur Krankenvorsorge verwendet werden kann, insbesondere für Berufskraftfahrer oder dergleichen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: einen Fahrzeugsitz mit den verschiedenen Positionen
- Fig. 2: den Fahrzeugsitz in einer ersten und in einer zweiten Sitzkonfiguration
- Fig. 3A: eine Fahrzeugsitz mit Betätigungselementen
- Fig. 3B: den Fahrzeugsitz mit einem Bedienvorrichtung
- Fig. 4: ein Flussdiagramm
- Fig. 5: eine Verschaltung einer Steuereinrichtung
- Fig. 6A: eine Exzentervorrichtung zur Veränderung einer Position
- Fig. 6B: eine Stangenvorrichtung zur Veränderung einer Position
- Fig. 7A: eine weitere Vorrichtung zur Veränderung einer Position
- Fig. 7B: die Vorrichtung der Fig. 7A in einem nach vorne verschwenkten Zustand
- Fig. 7C: die Vorrichtung der Fig. 7B in einem nach hinten verschwenkten Zustand

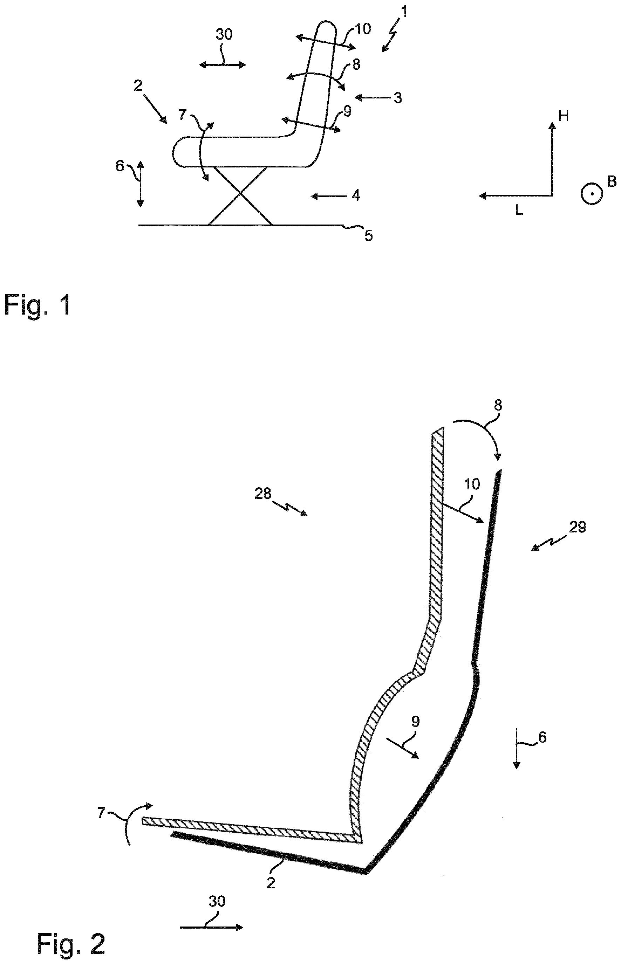

Figur 1 zeigt einen Fahrzeugsitz 1 mit einem Sitzteil 2 und einer Rückenlehne 3. Der Sitz 1 ist mittels eines Scherengestells 4 auf einem Fahrzeugboden 5 eines nicht weiter gezeigten Fahrzeugs abgestellt und befestigt. Denkbar sind statt des Scherengestells 4 auch andere Befestigung des Fahrzeugsitzes 1, beispielsweise über Sitzschienen (hier nicht gezeigt) oder dergleichen. Es ist dabei denkbar, dass der Fahrzeugsitz 1 eine Dämpfung und/oder eine Federung (hier nicht gezeigt) aufweist.

Die verschiedenen Pfeile 6, 7, 8, 9, 10, 30 geben hierbei die Einstellmöglichkeiten der verschiedenen Sitzkonfigurationspositionen, nämlich der Sitzhöhenposition 6, der Sitzneigungsposition 7, der Rückenlehnenneigungsposition 8, der Lendenstützenposition 9, die Längsposition 30 sowie der Schulterstützenposition 10 an.

Figur 2 zeigt den erfindungsgemäßen Fahrzeugsitz in seiner ersten Sitzkonfiguration 28, dargestellt durch die schraffierte Fläche, hier für eine aufrechte Haltung und eine Lordose-unterstützende Konfiguration des Fahrzeugsitzes 1 dargestellt, und in seiner zweiten Sitzkonfiguration 29, dargestellt durch die durchgehend schwarze Fläche, hier für eine geneigte Haltung und als eine Kyphose-unterstützende Konfiguration des Fahrzeugsitzes 1 dargestellt.

Die zweite Sitzkonfiguration 29 unterscheidet sich dabei von der ersten Sitzkonfiguration 28 folgendermaßen. Wie der Figur 2 genau zu entnehmen ist, wurde die Sitzneigungsposition 7 vergrößert, was damit einhergeht, dass die Neigung des Sitzteils 2 gegenüber der Horizontalen erhöht wurde.

Im Bereich der Lende zeigt die erste Sitzkonfiguration 28 eine Lordose-unterstützende Einstellung der Lendenstützenposition 9, wohingegen die zweite Sitzkonfiguration 29 eine Kyphose-unterstützende Einstellung der Lendenstützeposition 9 zeigt.

Darüber hinaus wurde die Längsposition 30 des Fahrzeugsitzes 1 verändert. Die Längsposition 30 der zweiten Sitzkonfiguration 29 ist in Fahrzeugsitzlängsrichtung betrachtet nun weiter hinten als bei der ersten Sitzkonfiguration 28.

Darüber hinaus wurde die Sitzhöhenposition 6 der zweiten Sitzkonfiguration 29 gegenüber der ersten Sitzkonfiguration 28 verringert.

Die Sitzkonfigurationspositionen 6, 7, 8, 9, 10, 30 werden so gewählt und geändert, dass der Hals- und Kopfbereich des Fahrzeugführers weiterhin entspannt nach vorne gerichtet sind, um so die Straße bzw. das Umfeld weiterhin optimal im Blickfeld haben zu können. Die Sitzkonfigurationspositionen 6, 7, 8, 9, 10, 30 werden mittels der Steuereinrichtung 17 so verändert, dass der Blickkontakt zur Straße bzw. dem Umfeld nicht unterbrochen wird.

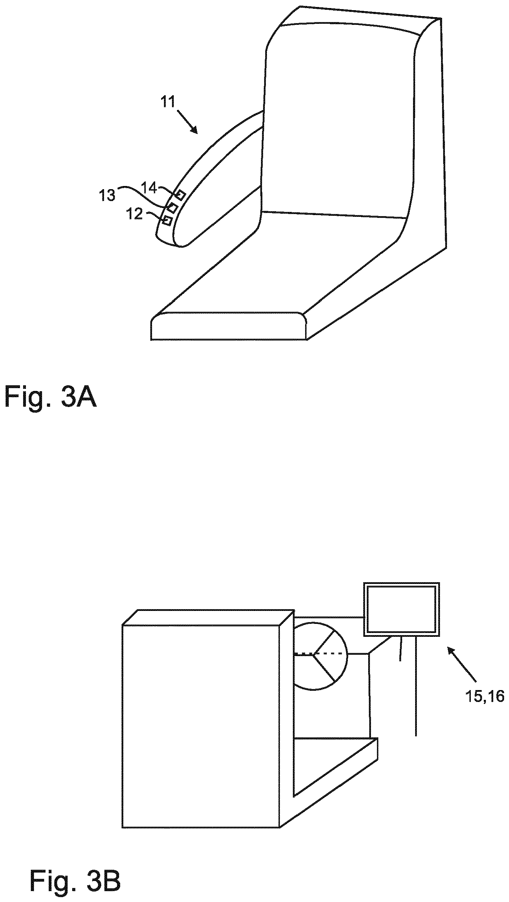

Der in der Figur 3A gezeigte Fahrzeugsitz 1 umfasst weiter eine Armlehne 11, auf welcher verschiedene Betätigungselemente 12, 13, 14 in Form von Tastern zum Einstellen und Abspeichern der ersten und zweiten Sitzkonfiguration des Fahrzeugsitzes 1 angeordnet sind. Es sind darüber hinaus ein drei derartige Taster 12, 13, 14 vorgesehen, wobei der erste Taster 12 die erste Sitzkonfiguration speichert, der zweite Taster 13 die zweite Sitzkonfiguration speichert und der dritte Taster 14 die Gesundheitsfunktion aktiviert bzw. deaktiviert. Denkbar sind auch andere Anbringungsbereiche für die Aufnahme der Betätigungselemente.

Der in der Figur 3B gezeigte Fahrzeugsitz 1 hat keine derartigen Taster an einer Sitzkomponente angebracht. Hierbei ist vielmehr abseits des Fahrzeugsitzes 1 eine visuelle Konsole 15 angeordnet. Bei dieser visuellen Konsole 15 kann es sich hierbei beispielsweise um ein Touch-Pad 16 oder dergleichen handeln. Vorteil dieser Anordnung ist es, dass über den Bildschirm dem Fahrer angezeigt werden kann, wie er eine bestimmte Sitzkonfiguration, also etwa eine erste 28 und eine zweite Sitzkonfiguration 29, also eine aufrechte und geneigte Haltung in Form einer Lordose- oder Kyphose-unterstützende Konfiguration, einzustellen hat. Ein Abspeichern dieser Sitzkonfigurationen 28, 29 erfolgt hier vorzugsweise über eine Eingabe am Touch-Pad 16. Es ist auch denkbar, hierzu eine Sitz-App bereitzustellen, so dass auch mittels eines Mobiltelefons oder dergleichen eine Steuerung der Steuereinrichtung 17 und dadurch eine Steuerung des Sitzes 1 möglich sind. Es kann hierdurch beispielsweise auch per App die Steuereinrichtung 17 gesteuert werden, so dass auf fest installierte Betätigungselemente 12, 13, 14 und Anzeigevorrichtungen 15, 16 verzichtet werden kann.

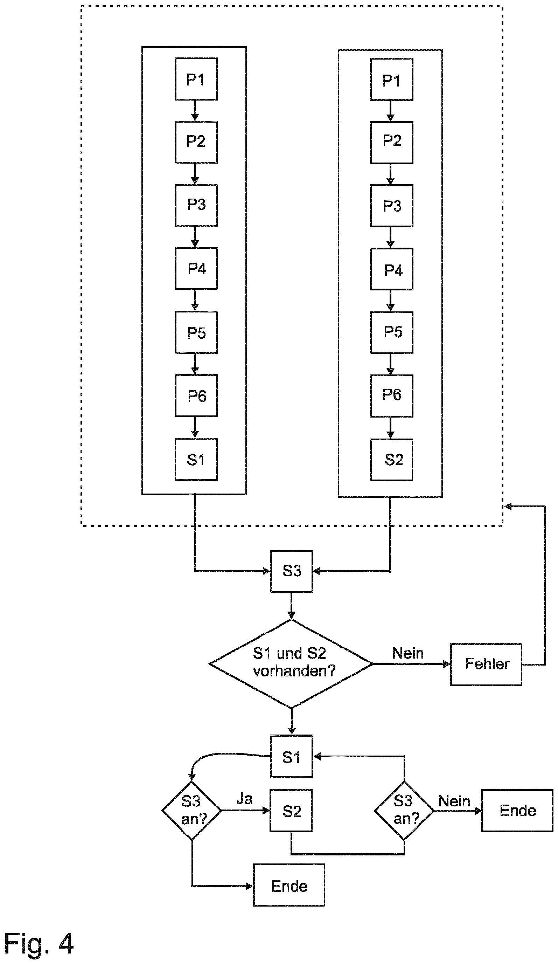

Das in der Figur 4 dargestellte Flussdiagramm beschreibt einen möglichen Verfahrensablauf, der insbesondere den Fahrzeugführer während einer Fahrt dazu animiert, seine Sitzhaltung aktiv aufgrund des Wechsels zwischen der ersten 28 und zweiten Sitzkonfiguration 29 zu ändern.

Vorzugsweise vor Beginn der Fahrt werden die erste 28 und die zweite Sitzkonfiguration 29 des Fahrzeugsitzes 1 durch Veränderung der Sitzkonfigurationspositionen 6, 7, 8, 9, 10, 30, also der Sitzneigungsposition 7, der Rückenlehnenneigungsposition 8, der Sitzhöhenposition 6, der Lendenstützenposition 9, der Längsposition des Sitzes 30 und der Schulterstützenposition 10, eingestellt. Der Fahrer beginnt, die jeweiligen Sitzkonfigurationspositionen 6, 7, 8, 9, 10, 30 nacheinander einzustellen, wobei eine mögliche Aufteilung derart ist, dass Parameter P1 die Sitzneigungsposition, P2 die Rückenlehnenneigungsposition, P3 die Sitzhöhenposition, P4 die Lendenstützenposition, P5 die Schulterstützenposition und P6 die Längsposition des Fahrzeugsitzes ist. Natürlich kann auch eine andere Reihenfolge der Sitzkonfigurationspositioneneinstellung möglich sein.

Nachdem nacheinander die Sitzkonfigurationspositionen P1 bis P6 eingestellt worden sind, betätigt der Fahrzeugführer den ersten Taster S1 und speichert somit die Einstellung als die erste Sitzkonfiguration 28 des Fahrzeugsitzes in der Speichereinrichtung 18 der Steuereinrichtung 17 ab.

Nun beginnt der Fahrer, die Sitzkonfigurationspositionen P1 bis P6 neu einzustellen, so dass eine zweite Sitzkonfiguration 29 des Fahrzeugsitzes 1 gegeben ist, die sich zumindest in einer, vorteilhaft in mindestens zwei der Positionen unterscheidet und besonders vorteilhaft in mindestens drei der Positionen unterscheidet. Nach Einstellung der zweiten Sitzkonfiguration 29 speichert der Fahrzeugführer die zweite Sitzkonfiguration 29 durch Betätigen des zweiten Tasters S2 ebenso wie die erste Sitzkonfiguration 28 in der Speichereinrichtung 18 der Steuereinrichtung 17 ab.

Es ist natürlich auch denkbar, die eingestellten Sitzkonfigurationen anderweitig abzuspeichern.

Betätigt der Fahrer nun den dritten Taster S3, der die Gesundheitsfunktion aktivieren soll, so wird vorteilhaft zuerst der Speicher der Speichereinrichtung 18 überprüft, ob tatsächlich eine erste 28 als auch eine zweite Sitzkonfiguration 29 des Fahrzeugsitzes 1 abgespeichert ist. Sollte dies nicht der Fall sein, so gibt die Steuereinrichtung 17 eine Fehlermeldung an den Fahrzeugführer aus und fordert ihn vorteilhafterweise auf, die entsprechend fehlende Sitzkonfiguration oder die fehlenden Sitzkonfigurationen einzustellen und abzuspeichern. Sollten sich eine erste 28 als auch eine zweite Sitzkonfiguration 29 im Speicher der Speichereinrichtung 18 befinden, so wird durch die Steuereinrichtung 17 durch Betätigung der entsprechenden Aktuatoren 19 eine der beiden Sitzkonfigurationen einstellen. Vorzugsweise handelt es sich hierbei um die erste Sitzkonfiguration 28.

Nachdem die erste Sitzkonfiguration 28 durch die Steuereinrichtung 17 eingestellt wurde, beginnt vorzugsweise eine interne Uhr zu laufen, die auf ein bestimmtes Zeitintervall eingestellt ist und einstellbar ist. Ein Zeitintervall kann dabei ca. 10 min betragen. Nachdem das Zeitintervall durchlaufen ist, steuert die Steuereinrichtung 17 die entsprechenden Aktuatoren 19 simultan derart an, dass eine simultane Verstellung der Sitzkonfigurationspositionen durchgeführt wird und den Fahrzeugsitz 1 in die zweite Sitzkonfiguration 29 einstellt.

Nach Einstellung der zweiten Sitzkonfiguration 29 wird vorteilhaft das gleiche Zeitintervall noch einmal durchlaufen.

Nach Ablauf dieses Zeitintervalls prüft vorzugsweise die Steuereinrichtung 17, ob die Gesundheitstaste aktiviert ist. Sollte dies nicht der Fall sein, weil etwa der Fahrzeugführer die Gesundheitsfunktion ausgeschaltet hat, so wird das Programm erst nach erneutem Betätigen der Gesundheitstaste, also des dritten Tasters, weitergeführt.

Ist die Gesundheitsfunktion weiterhin aktiviert, so wird durch eine simultane Verstellung der Positionen wieder die erste Sitzkonfiguration des Fahrzeugsitzes eingestellt.

Die in der Figur 4 gezeigte Schleife "*Sitzkonf. 1* → *Durchlaufen des Zeitintervalls* → *Überprüfung, ob Gesundheitsfunktion aktiviert* → *Sitzkonf.2* → *Durchlaufen des Zeitintervalls* → *Überprüfung, ob Gesundheitsfunktion aktiviert* → *Sitzkonf. 1"* wird dabei solange wiederholt, bis der Fahrzeugführer das Programm beendet. Eine Beendigung des Programms kann beispielsweise auch bei Abstellen des Motors hervorgerufen werden.

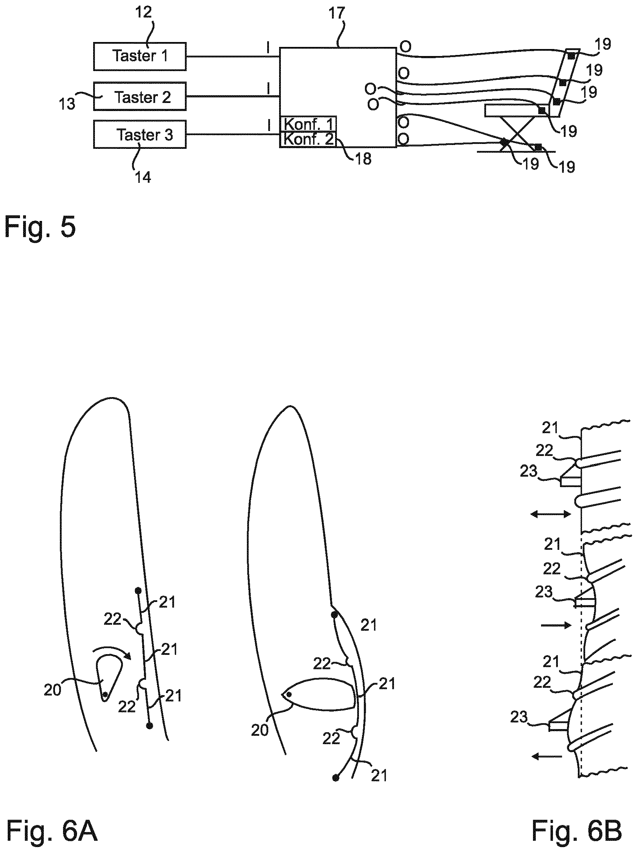

In der Figur 5 ist dabei eine mögliche Schaltung der Steuereinrichtung 17 gezeigt. Die Steuereinrichtung 17 umfasst dabei eine Speichereinrichtung 18, in der die erste 28 als auch die zweite Sitzkonfiguration 29 des Fahrzeugsitzes 1 gespeichert sind.

Die Steuereinrichtung 17 umfasst dabei mehrere Eingangskanäle I, die mit den drei verschiedenen Tastern 12, 13, 14 verbunden ist. Die Eingangskanäle I können sowohl analoger Natur oder digitaler Natur sein. Analoge Eingangskanäle I sind beispielsweise dann ausgebildet, wenn es sich bei den Tastern um tatsächliche Taster handelt, digitale Eingangskanäle können durch Betätigung der Taster auf einem Touch-Pads ausgebildet sein.

Die Ausgangskanäle O der Steuereinrichtung 17 sind dabei jeweils mit einem Aktuator 19 verbunden, mittels welcher die jeweiligen Positionen des Sitzes 1 eingestellt werden können. Dabei ist vorzugsweise jeweils ein Ausgangskanal O mit einem Aktuator 19 verbunden. Dies bedeutet, dass jeder Aktuator 19 separat angesteuert werden kann, was für eine simultane Verstellung der Parameter durch die Aktuatoren 19 besonders vorteilhaft ist. Die Positionen der Aktuatoren 19 sind dabei nur beispielhaft angegeben.

Die Figuren 6A und 6B zeigen beispielhaft verschiedene Ausführungsformen zur Veränderung der Lordose bzw. der Kyphose im Bereich der Lende und/oder der Brust.

Figur 6A zeigt dabei einen durch einen Aktuator 19, insbesondere einen Motor angetriebenen Exzenter 20 und davor angeordnete Blechstreifen 21. Die Blechstreifen 21 sind dabei länglich in Sitzbreitenrichtung B gesehen, wobei mehrere Blechstreifen 21 vorgesehen sind. Die verschiedenen Blechstreifen 21 sind dabei elastisch mittels einer Verbindung 22 miteinander verbunden, wobei der in Fahrzeugsitzhöhenrichtung H gesehene oberste und unterste Blechstreifen 21 an einem Ende fest mit einem Rückenlehnenrahmen (hier nicht gezeigt) verbunden ist.

Ist der Exzenter 20 mit keinem der Blechstreifen 21 in Wirkkontakt, wird dies als Nullstellung bezeichnet. Wird nun der Exzenter 20 in der Nullstellung betrieben, so bewegt sich ein Ende auf die Blechstreifen 21 zu, so dass er in Wirkkontakt mit diesem kommt. Wird der Exzenter 20 weiter gedreht, so drückt er diesen Blechstreifen 21 in Fahrzeugsitzlängsrichtung L gesehen nach vorne, wobei dadurch mittels der elastischen Verbindung 22 zwischen den Blechstreifen 21 eine nach vorn gerichtete Wölbung, also eine Lordoseunterstützung, entsteht. Bewegt sich der Exzenter 20 nun wieder von den Blechstreifen 21 weg, also nach hinten, so bewegen sich auch die Blechstreifen 21 wieder in seine Nullstellung.

Ähnlich funktioniert auch die in der Figur 6B gezeigte Ausführungsform. Auch hier ist ein wie in der Figur 6A gezeigter Blechstreifenaufbau gezeigt. Der Blechstreifenaufbau ist in Fahrzeugsitzbreitenrichtung B zu sehen. Vorteilhaft mittig in Fahrzeugsitzhöhenrichtung H gesehen des Blechstreifenaufbaus ist ein Verformungselement 23 in Form einer Stange 23 mit einem Blechstreifen 21 in Wirkkontakt, wobei besonders bevorzugt das Verformungselement 23 mit dem Blechstreifen 21 fest oder lösbar verbunden ist. Das Verformungselement 23 ist dabei vorzugsweise mittels eines Aktuators 19, wie etwa einem Motor, in Fahrzeugsitzlängsrichtung L verschiebbar. Bei einer Verschiebung des Verformungselements 23 in Fahrzeugsitzlängsrichtung L nach vorne bildet sich eine Wölbung ebenfalls in Fahrzeugsitzlängsrichtung L nach vorne aus, also eine Lordose-Unterstützung ausgebildet wird. Besonders vorteilhaft ist das Verformungselement 23 in Sitzbreitenrichtung B ausgebildet, so dass eine gleichmäßige Wölbung über die gesamte Fahrzeugsitzbreitenrichtung B gesehen entsteht. Besonders vorteilhaft weist das Verformungselement 23 in dem Bereich, der mit dem Blechstreifen 21 in Wirkkontakt steht eine gekrümmte Form auf, so dass eine besonders vorteilhafte Verformung der Blechstreifen 21 zustande kommen kann.

Umgekehrt ist dies der Fall, wenn das Verformungselement 23 in Fahrzeugsitzlängsrichtung L nach hinten verschoben wird. In diesem Fall wird eine Wölbung in Fahrzeugsitzlängsrichtung L nach hinten ausgebildet, was vorliegend einer Kyphose-Unterstützung gleichkommt.

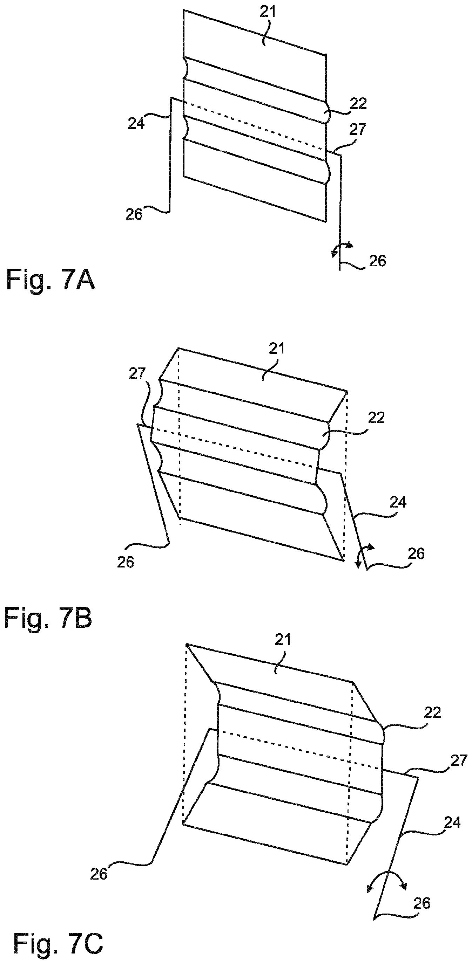

Alternativ zu dem Verformungselement 23 in Form einer Stange ist auch eine Bügelkonstruktion, wie in Figur 7A gezeigt, denkbar. Ein Bügelelement 24 ist dabei derart ausgebildet, dass es um deren Endabschnitte 26 schwenkbar ist. Das in Fahrzeugsitzbreitenrichtung B verlaufende Querelement 27 des Bügelelements 24 ist vorzugsweise dabei mit einem der Blechstreifen 21 in Wirkkontakt oder wie ebenfalls die Stange 23 mit einem Blechstreifen 21 fest oder lösbar verbunden.

Durch Verschwenken des Bügelelements 24 in Fahrzeugsitzlängsrichtung L nach vorne, wie in Figur 7B gezeigt, wird der in Wirkkontakt mit dem Bügelelement 24 stehende Blechstreifen 21 nach vorne bewegt. Da dieser mit den anderen Blechstreifen 21 ebenso vorteilhaft elastisch verbunden ist, wird auch hier eine vorteilhafte Lordose-unterstützende Wölbung erzielt.

Analog verhält es sich beim Verschwenken des Bügelelements 24 nach hinten, wie in Figur 7C gezeigt. Hierbei wird jedoch nicht eine Lordose-unterstützende Wölbung erzielt, sondern vielmehr eine Kyphose-unterstützende Wölbung.

Es ist auch denkbar, dass die Blechstreifen 21 nicht in Fahrzeugsitzbreitenrichtung B, sondern in Fahrzeugsitzhöhenrichtung H verlaufend angeordnet sind.

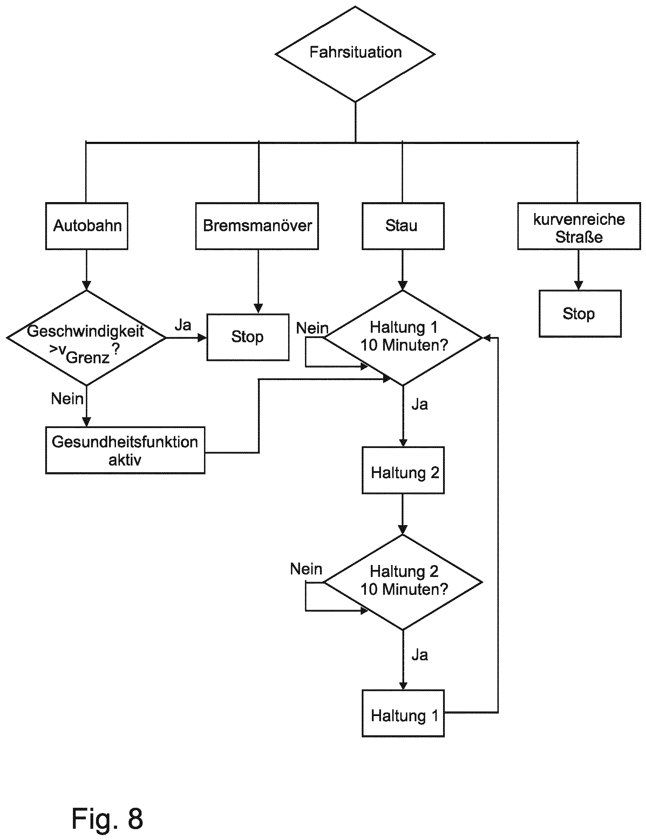

In der Figur 8 ist ein weiteres Flussdiagramm zu erkennen, welches aufzeigt, wie ein Wechsel der Sitzkonfiguration 28, 29 abhängig von äußeren Aktuatoren, insbesondere bei verschiedenen Fahrmoden, beeinflusst wird.

Es wird davon ausgegangen, dass ein Fahrer bereits zwei Sitzkonfigurationen 28, 29 eingestellt hat. Es macht natürlich dabei nur Sinn, einen Wechsel zwischen den Sitzkonfigurationen durchzuführen, wenn das Fahrzeug in Benutzung ist, also der Motor aktiviert ist. Ist der Motor deaktiviert, so muss kein Wechsel der Sitzkonfigurationen durchgeführt werden. Es ist jedoch möglich, auch bei ausgeschaltetem Motor trotzdem die Gesundheitsfunktion zu aktiveren, sollte ein Fahrzeug mit Fahrer länger im Stau oder dergleichen stehen.

Mittels der Steuereinrichtung 17 ist es möglich, die aktuelle Fahrsituation zu ermitteln. Vorteilhafterweise wird zwischen verschiedene Fahrsituationen unterschieden, beispielsweise eine Autobahnfahrt, Bremsen, Stehen im Stau oder Befahren einer kurvenreichen Straße.

Es ist dabei vorteilhaft, für die jeweilige Fahrsituation mindestens einen charakterisierenden Wert anzugeben, beispielsweise die Geschwindigkeit des Fahrzeuges bei Autobahnfahrt oder Stau und die Beschleunigung für das Bremsen und Befahren einer kurvenreichen Straße. Vorteilhaft wird mittels der Steuereinrichtung 17 der jeweilige Wert aufgenommen und verarbeitet und noch vorteilhafter über einen längeren Zeitraum, beispielsweise solange der Motor aktiviert ist, ausgewertet.

Abhängig von der Fahrsituation wird vorzugsweise automatisch die Gesundheitsfunktion aktiviert oder deaktiviert. Handelt es sich beispielsweise um eine Autobahnfahrt, beispielsweise mit einer Geschwindigkeit größer als 150 km/h, so ist es vorteilhaft für den Fahrer, ruhig und konzentriert sitzen zu können. Die Gesundheitsfunktion würde hierbei als störend empfunden werden. Bei geringeren Geschwindigkeiten kann die Gesundheitsfunktion jedoch aktiv sein, da eine geringere Aufmerksamkeit nötig ist. Vorzugsweise kann die Grenzgeschwindigkeit vom Fahrer vorgegeben werden und in die Steuereinrichtung eingegeben werden.

Auch bei Bremsmanövern möchte der Fahrer nicht abgelenkt oder gestört werden durch eine aktive Gesundheitsfunktion. Es ist daher denkbar, dass die Steuereinrichtung ein Bremsmanöver erkennt und dabei automatisch die Gesundheitsfunktion deaktiviert. Nach einer vorgebbaren oder vorgegebenen Zeitdifferenz wird die Gesundheitsfunktion dann wieder automatisch aktiviert. Die Zeitdifferenz wird von dem letzten Bremsmanöver aus berechnet und bei erneutem Bremsen immer zurückgesetzt und neu gestartet.

Ähnlich verhält es sich bei den Fahrsituationen Stau und Befahren einer kurvenreichen Straße. Im Stau ist relativ wenig Konzentration nötig, wohingegen beim Befahren einer kurvenreichen Straße eine erhöhte Konzentration nötig ist.

Durch das Flussdiagramm der Figur 8 ist ein möglicher Ablauf angezeigt. Natürlich sind auch noch andere Fahrsituationen denkbar und vorstellbar, die hier jedoch nicht weiter aufgezeigt werden.

Es ist dabei prinzipiell möglich, die Sitzkonfigurationen vor dem Starten oder nach dem Starten des Motors einzustellen. Auch ist es denkbar, die erste Sitzkonfiguration vor dem Starten des Motors und die zweite Sitzkonfiguration nach dem Starten des Motors einzustellen.

Bezüglich des vorliegenden Diagrammes gemäß Figur 8 sind die Sitzkonfigurationen eingestellt und der Motor aktiviert. Sollte der Motor deaktiviert sein, so ist auch die Gesundheitsfunktion deaktiviert. Eine Ausnahme kann hierbei die Fahrsituation Stau bilden.

Ein Wechsel der Sitzkonfigurationen wird vorliegend alle 10 Minuten durchgeführt, d.h. ist die erste Sitzkonfiguration 10 Minuten eingestellt gewesen, wird in die zweite Sitzkonfiguration gewechselt, wobei nach 10 Minuten dann wieder in die erste Sitzkonfiguration gewechselt wird. Haltung 1 entspricht hierbei der ersten Sitzkonfiguration, Haltung 2 der zweiten Sitzkonfiguration, vGrenz entspricht der vorgegebenen bzw. vorgebbaren Grenzgeschwindigkeit.

### Bezugszeichenliste

- 1: Fahrzeugsitz
- 2: Sitzteil
- 3: Rückenlehne
- 4: Scherengestell
- 5: Fahrzeugboden
- 6: Sitzhöhenposition
- 7: Sitzneigungsposition
- 8: Rückenlehnenneigungsposition
- 9: Lendenstützenposition
- 10: Schulterstützenposition
- 11: Armlehne
- 12: erstes Betätigungselement
- 13: zweites Betätigungselement
- 14: drittes Betätigungselement
- 15: visuelle Konsole
- 16: Touch-Pad
- 17: Steuereinrichtung
- 18: Speichereinrichtung
- 19: Aktuator
- 20: Exzenter
- 21: Blechstreifen
- 22: Verbindung
- 23: Verformungselement
- 24: Bügelelement
- 25: vorderer Bereich des Sitzteils
- 26: Endabschnitt des Bügelelements
- 27: Querelement des Bügelelements
- 28: erste Konfiguration
- 29: zweite Konfiguration
- 30: Längsposition des Fahrzeugsitzes
- I: Eingangskanal
- O: Ausgangskanal
- B: Fahrzeugsitzbreitenrichtung
- L: Fahrzeugsitzlängsrichtung
- H: Fahrzeugsitzhöhenrichtung

## Patentansprüche

1. Fahrzeugsitz (1) mit einem Sitzteil (2) und einer Rückenlehne (3) und mit veränderbaren Sitzkonfigurationspositionen (6, 7, 8, 9, 10, 30), umfassend eine erste Position einer Schulterstütze (10), eine zweite Position einer Lendenstütze (9), eine dritte Sitzhöhenposition (6), eine vierte Längsposition (30) des Fahrzeugsitzes (1), eine fünfte Sitzneigungsposition (7) und eine sechste Rückenlehnenneigungsposition (8), mittels welcher eine erste (28) und eine davon verschiedene zweite Sitzkonfiguration (29) definierbar sind,
**dadurch gekennzeichnet, dass**
sich die Sitzkonfigurationen (28, 29) in mindestens zwei verschiedenen Positionen (6, 7, 8, 9, 10, 30) unterscheiden und der Fahrzeugsitz (1) eine Steuereinrichtung (17) aufweist, mittels welcher die erste (28) und die zweite Sitzkonfiguration (29) des Fahrzeugsitzes (1) automatisch abwechselnd nach einem vorbestimmten und veränderbaren Zeitintervall mittels einer simultanen und voneinander unabhängigen Veränderung der mindestens zwei verschiedenen Positionen (6, 7, 8, 9, 10, 30) einstellbar sind.

2. Fahrzeugsitz (1) nach Anspruch 1,
**dadurch gekennzeichnet, dass**
sich die Sitzkonfigurationen (28, 29) in allen sechs Sitzkonfigurationspositionen (6, 7, 8, 9, 10, 30) unterscheiden.

3. Fahrzeugsitz (1) nach Anspruch 1,
**dadurch gekennzeichnet, dass**
in mindestens zwei aufeinanderfolgenden Einstellschritten jeweils zumindest zwei der Sitzkonfigurationspositionen (6, 7, 8, 9, 10, 30) simultan und unabhängig voneinander einstellbar sind.

4. Fahrzeugsitz (1) nach einem der Ansprüche 1 bis 3,
**dadurch gekennzeichnet, dass**
mittels der Steuereinrichtung (17) abwechselnd die erste (28) und die zweite Sitzkonfiguration (29) automatisch einstellbar ist.

5. Fahrzeugsitz (1) nach einem der Ansprüche 1 bis 4,
**dadurch gekennzeichnet, dass**
jeder der Sitzkonfigurationspositionen (6, 7, 8, 9, 10, 30) durch mindestens einen Aktuator (19), der mit einem zu dem jeweiligen Sitzkonfigurationsparameter (6, 7, 8, 9, 10, 30) gehörenden Bauteil wirkverbunden ist, veränderbar ist.

6. Fahrzeugsitz (1) nach einem der Ansprüche 1 bis 5,
**dadurch gekennzeichnet, dass**
die Steuereinrichtung (17) eine Speichereinrichtung (18) umfasst, in welcher die erste (28) und die zweite Sitzkonfiguration (29) abspeicherbar sind.

7. Fahrzeugsitz (1) nach einem der Ansprüche 1 bis 6,
**dadurch gekennzeichnet, dass**
ein auf dem Fahrzeugsitz (1) sitzender Fahrzeugführer mittels eines akustischen und/oder optischen Signals aufforderbar ist, einen Wechsel der Sitzkonfigurationen (28, 29) durchzuführen.

8. Verfahren zur Einstellung von Sitzkonfigurationen (28, 29) eines Fahrzeugsitzes (1) umfassend ein Sitzteil (2) und eine Rückenlehne (3) und mit veränderbaren Sitzkonfigurationspositionen (6, 7, 8, 9, 10, 30), umfassend eine erste Position einer Schulterstütze (10), eine zweite Position einer Lendenstütze (9), eine dritte Sitzhöhenposition (6), eine vierte Längsposition (30) des Fahrzeugsitzes (1), eine fünfte Sitzneigungsposition (7) und eine sechste Rückenlehnenneigungsposition (8), mittels welcher eine erste (28) und eine davon verschiedene zweite Sitzkonfiguration (29) definiert werden,
**dadurch gekennzeichnet, dass**
sich die Sitzkonfigurationen (28, 29) in mindestens zwei verschiedenen Positionen (6, 7, 8, 9, 10, 30) unterscheiden und der Fahrzeugsitz (1) eine Steuereinrichtung (17) aufweist, mittels welcher die erste (28) und die zweite Sitzkonfiguration (29) des Fahrzeugsitzes (1) automatisch abwechselnd nach einem vorbestimmten und veränderbaren Zeitintervall mittels einer simultanen und voneinander unabhängigen Veränderung der mindestens zwei verschiedenen Positionen (6, 7, 8, 9, 10, 30) eingestellt werden.

## Claims

1. Vehicle seat (1) having a seat part (2) and a backrest (3) and having changeable seat configuration positions (6, 7, 8, 9, 10, 30), comprising a first position of a shoulder support (10), a second position of a lumbar support (9), a third seat height position (6), a fourth longitudinal position (30) of the vehicle seat (1), a fifth seat inclination position (7) and a sixth backrest inclination position (8), by means of which positions a first seat configuration (28) and a second seat configuration (29), which is different to the first, can be defined, **characterised in that** the seat configurations (28, 29) differ in at least two different positions (6, 7, 8, 9, 10, 30), and the vehicle seat (1) has a control device (17) by means of which the first (28) and the second seat configuration (29) of the vehicle seat (1) can be automatically alternately adjusted after a predetermined and changeable time interval by means of a simultaneous and mutually independent change of the at least two different positions (6, 7, 8, 9, 10, 30).

2. Vehicle seat (1) according to claim 1, **characterised in that** the seat configurations (28, 29) differ in all six seat configuration positions (6, 7, 8, 9, 10, 30).

3. Vehicle seat (1) according to claim 1, **characterised in that** in at least two successive adjustment steps, each of at least two of the seat configuration positions (6, 7, 8, 9, 10, 30) can be adjusted simultaneously and independently of one another.

4. Vehicle seat (1) according to any of claims 1 to 3, **characterised in that** the first (28) and the second seat configuration (29) can be alternately automatically adjusted by means of the control device (17).

5. Vehicle seat (1) according to any of claims 1 to 4, **characterised in that** each of the seat configuration positions (6, 7, 8, 9, 10, 30) can be changed by means of at least one actuator (19) which is operatively connected to a component associated with the relevant seat configuration parameter (6, 7, 8, 9, 10, 30).

6. Vehicle seat (1) according to any of claims 1 to 5, **characterised in that** the control device (17) comprises a memory device (18) in which the first (28) and the second seat configuration (29) can be stored.

7. Vehicle seat (1) according to any of claims 1 to 6, **characterised in that** a driver sitting in the vehicle seat (1) can be prompted by means of an acoustic and/or optical signal to carry out a change of the seat configurations (28, 29).

8. Method for adjusting seat configurations (28, 29) of a vehicle seat (1) having a seat part (2) and a backrest (3) and having changeable seat configuration positions (6, 7, 8, 9, 10, 30), comprising a first position of a shoulder support (10), a second position of a lumbar support (9), a third seat height position (6), a fourth longitudinal position (30) of the vehicle seat (1), a fifth seat inclination position (7), and a sixth backrest inclination position (8), by means of which positions a first seat configuration (28) and a second seat configuration (29), which is different to the first, are defined, **characterised in that** the seat configurations (28, 29) differ in at least two different positions (6, 7, 8, 9, 10, 30), and the vehicle seat (1) has a control device (17) by means of which the first (28) and the second seat configuration (29) of the vehicle seat (1) can be automatically alternately adjusted after a predetermined and changeable time interval by means of a simultaneous and mutually independent change of the at least two different positions (6, 7, 8, 9, 10, 30).

## Revendications

1. Siège de véhicule (1) ayant une assise (2) et un dossier (3) et ayant des positions de configuration de siège modifiables (6, 7, 8, 9, 10, 30), comportant une première position d'un support d'épaule (10), une deuxième position d'un support lombaire (9), une troisième position de hauteur d'assise (6), une quatrième position longitudinale (30) du siège de véhicule (1), une cinquième position d'inclinaison d'assise (7) et une sixième position d'inclinaison de dossier (8), au moyen desquelles une première (28) et une seconde configuration de siège (29) différente de celle-ci sont aptes à être définies,
**caractérisé par le fait que**
les configurations de siège (28, 29) diffèrent dans au moins deux positions différentes (6, 7, 8, 9, 10, 30) et le siège de véhicule (1) présente un dispositif de commande (17) au moyen duquel la première (28) et la seconde configuration de siège (29) du siège de véhicule (1) sont réglables automatiquement en alternance après un intervalle de temps prédéfini et modifiable au moyen d'une modification simultanée et indépendante l'une de l'autre desdites au moins deux positions différentes (6, 7, 8, 9, 10, 30).

2. Siège de véhicule (1) selon la revendication 1,
**caractérisé par le fait que**
les configurations de siège (28, 29) diffèrent dans toutes les six positions de configuration de siège (6, 7, 8, 9, 10, 30).

3. Siège de véhicule (1) selon la revendication 1,
**caractérisé par le fait que**
dans au moins deux étapes de réglage successives, à chaque fois au moins deux des positions de configuration de siège (6, 7, 8, 9, 10, 30) sont réglables simultanément et indépendamment l'une de l'autre.

4. Siège de véhicule (1) selon l'une des revendications 1 à 3,
**caractérisé par le fait que**
au moyen du dispositif de commande (17) en alternance la première (28) et la seconde configuration de siège (29) sont réglables automatiquement.

5. Siège de véhicule (1) selon l'une des revendications 1 à 4,
**caractérisé par le fait que**
chacune des positions de configuration de siège (6, 7, 8, 9, 10, 30) est modifiable par au moins un actionneur (19), qui est relié fonctionnellement avec un élément appartenant au paramètre de configuration de siège respectif (6, 7, 8, 9, 10, 30).

6. Siège de véhicule (1) selon l'une des revendications 1 à 5,
**caractérisé par le fait que**
le dispositif de commande (17) comporte un dispositif de mémoire (18), dans lequel la première (28) et la seconde configuration de siège (29) sont mémorisables.

7. Siège de véhicule (1) selon l'une des revendications 1 à 6,
**caractérisé par le fait qu'**
un conducteur de véhicule assis sur le siège de véhicule (1) peut être invité, au moyen d'un signal acoustique et/ou optique, à effectuer un changement des configurations de siège (28, 29).

8. Procédé de réglage de configurations de siège (28, 29) d'un siège de véhicule (1) comportant une assise (2) et un dossier (3) et ayant des positions de configuration de siège (6, 7, 8, 9, 10, 30) modifiables, comportant une première position d'un support d'épaule (10), une deuxième position d'un support lombaire (9), une troisième position de hauteur d'assise (6), une quatrième position longitudinale (30) du siège de véhicule (1), une cinquième position d'inclinaison d'assise (7) et une sixième position d'inclinaison de dossier (8), au moyen desquelles une première (28) et une seconde configuration de siège (29) différente de celle-ci sont définies,
**caractérisé par le fait que**
les configurations de siège (28, 29) diffèrent dans au moins deux positions différentes (6, 7, 8, 9, 10, 30) et le siège de véhicule (1) présente un dispositif de commande (17) au moyen duquel la première (28) et la seconde configuration de siège (29) du siège de véhicule (1) sont réglées automatiquement en alternance après un intervalle de temps prédéfini et modifiable au moyen d'une modification simultanée et indépendante l'une de l'autre desdites au moins deux positions différentes (6, 7, 8, 9, 10, 30).
